# EUROPÄISCHE PATENTSCHRIFT

(11) **EP 1 335 457 B1**
(45) Veröffentlichungstag und Bekanntmachung des Hinweises auf die Patenterteilung: **12.07.2006**
(21) Anmeldenummer: 02028330.5
(22) Anmeldetag: 17.12.2002
(51) Int. Cl.: H01S 3/067, H01S 3/0941, G01S 7/48, G01S 17/88

(54) **Ladar-System für Flugkörper**
Ladar system for flying vehicle
Syteme Ladar aéroporté

(30) Priorität: 08.01.2002 DE 10200362
(43) Veröffentlichungstag der Anmeldung: 13.08.2003
(73) Patentinhaber: Diehl BGT Defence GmbH & Co.KG, 88662 Überlingen (DE)
(72) Erfinder: Barenz, Joachim, 88690 Uhldingen (DE); Imkenberg, Frank, 88662 Überlingen (DE); Tholl, Hans-Dieter, 88690 Uhldingen (DE)
(74) Vertreter: Diehl Patentabteilung

(56) Entgegenhaltungen:
- EP-A- 1 089 103
- EP-A- 1 091 460
- WO-A-01/69313
- US-A- 5 847 816
- US-B1- 6 215 582
- HELLSTROM J ET AL: "OPTICAL PARAMETRIC AMPLIFICATION IN PERIODICALLY POLED KTIOPO4 SEEDED BY AN ER-YB:GLASS MICROCHIP LASER" OPTICS LETTERS, OPTICAL SOCIETY OF AMERICA, WASHINGTON, US, Bd. 26, Nr. 6, 15. März 2001 (2001-03-15), Seiten 352-354, XP001020249 ISSN: 0146-9592

## Beschreibung

### Technisches Gebiet

Die Erfindung betrifft ein LADAR-System, enthaltend einen Master-Oszillator mit einem Laser-aktiven Medium und eine als Faserverstärker ausgebildete Verstärkerstufe zur Leistungsverstärkung, mit welcher die Leistung der den Oszillator verlassenden Strahlung verstärkt wird.

Ein LADAR arbeitet nach dem gleichen Prinzip wie ein RADAR, aber mit Laserstrahlung, also bei kürzeren Wellenlängen. Entsprechend kann mit einem LADAR eine genauere Entfernungsbestimmung vorgenommen werden. Aufgrund der höheren Genauigkeit können Profilmessungen vorgenommen werden, indem ein Gesichtsfeld abgetastet wird. Aus diesen Profilmessungen kann dann ermittelt werden um was für einen Körper es sich handelt. Aus den LADAR-Signalen kann weiterhin Information darüber erhalten werden mit welcher Geschwindigkeit und in welcher Richtung sich der Körper bewegt etc. Dabei wird mit höherer Pulsfrequenz des eingesetzten Lasers eine höhere Abtastrate erreicht und mit kleinerer Wellenlänge eine höhere Auflösung.

LADAR-Systeme werden insbesondere auch bei der Suche und Verfolgung von Zielen eingesetzt. Die Anforderungen an einen bei der Zielsuche und Zielverfolgung eingesetzten LADAR-Sender sind dabei hoch. Der dort eingesetzte Laser soll eine hohe Pulsfrequenz bei hoher Pulsenergie erreichen. Dabei sollen die Laserparameter Amplitude, Frequenz, Phase, Polarisation und die Dauer des emittierten Pulses zur Erzeugung unterschiedlicher Pulsformen modulierbar sein.

### Stand der Technik

Bekannte Laseranordnungen für LADAR basieren auf diskreten Lasern mit einem Laserresonator aus Spiegeln, die sehr genau justiert sein müssen. Entsprechend sind die verwendeten Anordnungen groß, schwer und empfindlich gegenüber Vibrationen und Temperaturschwankungen. Die bekannten Laseranordnungen benötigen weiterhin zur Erreichung ausreichender Pulsenergie Mittel zur Wärmeabfuhr, welche in der Regel aus einer Wasserkühlung bestehen. Dadurch wird die Anordnung weiter vergrößert. Auch verhindert die Ausbildung großer Temperaturgradienten bei vielen Lasersystemen das Erreichen einer hohen Pulsrepititionsrate. Diese ist aber für die Messungen bei hohen Relativgeschwindigkeiten mit den dafür erforderlichen hohen Abtastraten notwendig.

Aufgrund dieser Eigenschaften wurde LADAR bisher in der Praxis nur am Boden verwendet. Für einen Einsatz in Flugkörpern sind die bekannten Anordnungen ungeeignet.

Es sind aus Telekommunikations-Anwendungen Faserlaser bekannt. Ein Faserlaser umfasst eine Faser mit einem Laser-aktiven Kern und einem lichtleitenden Mantel. Über eine Pumplichtquelle wird Strahlung in den Laser-aktiven Kern geleitet, was zu Laseraktivität führt. Ein solcher Faserlaser braucht aufgrund des großen Verhältnisses zwischen Oberfläche und Volumen nicht zusätzlich mit Wasser gekühlt werden. Ein Beispiel für einen solchen Faserlaser ist eine Erbium-dotierte Glasfaser.

In der US 5 847 816 wird ein Mikro-Doppler-LADAR-System zur Zielbeobachtung beschrieben, welches einen Faserlaser als Verstärkerstufe eines Master-Oszillators einsetzt. Das auf der Erde basierende LADAR-System arbeitet mit einer kohärenten Transmitter-Empfänger-Anordnung und einem Faserlaser als Master-Oszillator.

Die Verwendung eines Faserverstärkers als Vorverstärker im Detektionspfad eines Laser-Doppler-Anemometers wurde von Többen, Buschmann, Müller und Dopheide in "40dB fibre optical preamplifier in 1064 nm laser Doppler anemometer", Electronics Letters **36**, S. 1024 beschrieben. Der beschriebene Faserverstärker verstärkt die Leistung eines ohnehin Leistungsstarken Nd:YAG-Lasers.

Es sind weiterhin Mikrochip-Laser bekannt. Ein Mikrochip-Laser umfasst ein laseraktives Medium in Form einer sehr dünnen Platte, wodurch eine kurze Resonatorlänge verwirklicht werden kann. Ein Beispiel für Mikrochip-Laser ist im Datenblatt der Firma Leti, CEA/Grenoble, "1,5 µm Passively Q-switched Microchip Lasers" vom September 2000 beschrieben. Die Spitzenleistung eines solchen Mikrochip-Lasers liegt danach bei 1 - 4 kW, bei Pulsbreiten von etwa 3 ns. Es sind Repitionsraten zwischen 1 und 20 kHz erreichbar und die Ausgangsleistung liegt bei 10-65 mW.

Hellström, Karlsson, Pasiskevicius und Laurell offenbaren auf der Konferenz "Advanced Solid-State Lasers 2001 " am 28.-31.01.2001 unter dem Titel "An optical parametric amplifier based on periodically poled KTi O PO₄, seeded by an Er-Yb:glass microchip laser" die Verwendung eines Mikrochip-Lasers mit einer zusätzlichen Verstärkerstufe. Die dort verwendete Verstärkerstufe arbeitete jedoch ohne Faserverstärker.

Keiner der vorgenannten Laser hat ausreichende Eigenschaften für die Anwendung in einem flugkörpertauglichen LADAR-System

In der EP 1 089 103 A2 wird ein Gehäuse zur kompakten Verpackung faseroptischer Bauelemente beschrieben. In dieses Gehäuse sind thermisch leitfähige Platten einschiebbar. Auf einer solchen Platte befinden sich konzentrische, ringförmige Oberflächenstrukturen, in deren ringförmige Zwischenräume verkapselte Faserbündel eingelegt werden.

In der US 6 215 582 B1 (SUDO et al.), 10. April 2001, und in der EP 1 091 460 A (NEC Corporation), 11. April 2001, werden Faserverstärker beschrieben, bei denen die Verstärkerfasern auf zylinderförmige Trägerkörper aufgewickelt sind.

### Offenbarung der Erfindung

Es ist Aufgabe der Erfindung, ein leichtes, gegenüber Vibrationen und Temperaturschwankungen unempfindliches LADAR-System zu schaffen, das eine besonders kompakte Bauweise aufweist und damit für den Einsatz in einem Flugkörper geeignet ist. Es ist ferner Aufgabe der Erfindung, eine Laseranordnung zu schaffen, die ohne zusätzliche Wasserkühlung Pulse hoher Pulsenergie bei hoher Repitionsrate erzeugt.

Erfindungsgemäß wird die Aufgabe durch die Kombination der Merkmale des Anspruchs 1 gelöst, nämlich dadurch, dass der Faserverstärker eine Verstärkerfaser umfasst, dass ein Trägerkörper mit einem Mantel vorgesehen ist, um dessen Mantel herum die Verstärkerfaser gewickelt ist, dass der Trägerkörper aus einem Material mit einer Temperaturleitfähigkeit besteht, die zur Abführung der Verlustwärme der Laseranordnung geeignet ist und dass der Master-Oszillator als ein Mikrochip-Laser ausgebildet und in einer Vertiefung des Trägerkörpers angeordnet ist. Dadurch wird eine kompakte Anordnung erreicht, die bei den Raumverhältnissen in Suchköpfen besonders vorteilhaft ist. Wenn der Trägerkörper aus einem Material mit hoher Temperaturleitfähigkeit besteht, dann kann die Verlustwärme des Lasers über den Trägerkörper abgeführt werden. Wärmeleitpaste, in welche die Verstärkerfaser eingebettet ist, kann zur Verbesserung der Wärmeabfuhr vorgesehen werden. Die Verstärkerfaser können auch mittels wärmeleitendem Klebstoff an einem Träger befestigt sein.

Eine zweistufige Anordnung hat den Vorteil, daß ein Laser mit vergleichsweise kurzer Wellenlänge und geringer Ausgangsleistung verwendet werden kann, der dann in einer Verstärkungsstufe auf die erforderliche Ausgangsleistung verstärkt wird. Durch die Verlagerung der Erzeugung der hohen Ausgangsleistung auf einen Faserverstärker vermeidet man eine aufwendige Kühlung. Die entstehende Restwärme kann über den Trägerkörper abgeführt werden. Da die minimale Pulsdauer eines Lasers proportionl zur Resonatorlänge ist, können durch entsprechend kurze Resonatorlänge sehr kleine Pulsdauern realisiert werden. Eine zweistufig Anordnung mit einem sogenannten Master-Oszillator mit kurzer Resonatorlänge und kleiner Ausgangsleistung und einem nachgeschalteten optischen Leistungsverstärker (Power Amplifier) ermöglicht kurze Pulse mit hoher Pulsrepititionsrate und hoher Pulsenergie. Dabei braucht für eine Modulation der emittierten Laserpulse nur der niederenergetische Master Oszillator moduliert werden.

Die Laseranordnung ist daher sehr einfach aufgebaut und ist mit geringen Abmessungen zu verwirklichen. Der Master Oszillator kann auch ohne Änderung des Leistungsverstärkers einfach ausgetauscht werden. Eine solche Laseranordnung erfüllt auch die Anforderungen, die für die Flugtauglichkeit gestellt werden. Sie weist eine hohe thermische Stabilität, sowie eine geringe Empfindlichkeit gegenüber Beschleunigung und Vibrationen auf.

Die Verwendung eines Faserverstärkers ermöglicht insbesondere die Erzeugung von Laserstrahlung in einem augensicheren Spektralbereich mit Wellenlängen, die größer als 1,5 Mikrometer sind, d.h. die Strahlung wird vom Auge nicht mehr fokussiert.

Der Master Oszillator ist als Mikrochip-Laser ausgebildet. Ein Mikrochip Laser besteht aus einer dünnen, laseraktiven Platte, zum Beispiel 1 mm dickem Erbium:Glas. Diese Mikrochip Laser sind in der Lage Strahlung kurzer Wellenlängen zu erzeugen und haben nur sehr geringe Abmessung. Da die Strahlungsleistung nachverstärkt wird, ist die vergleichsweise geringe Strahlungsleistung ohne Relevanz.

In einer Ausgestaltung der Erfindung dient ein Diodenlaser als Pumplichtquelle für den Faserverstärker. Diodenlaser sind klein, kostengünstig und leicht zu handhaben und eignen sich daher für eine Anwendung in Flugkörpern besonders gut.

In dem Trägerkörper ist eine Vertiefung vorgesehen, in welcher der Laser angeordnet ist. Auch dadurch wird die Anordnung kompakt. In dem Trägerkörper kann außerdem eine Vertiefung vorgesehen sein, in welchem die Pumplichtquelle und/oder weitere optische Teile der Laseranordnung angeordnet sind. Vorzugsweise ist die Vertiefung mit einer Abdeckung verschließbar. Dadurch werden die in der Vertiefung befindlichen Komponenten gegen äußere Einflüsse geschützt.

Der Trägerkörper ist vorzugsweise zylindrisch oder prismatisch mit elliptischem oder nierenförmigem Querschnitt, wobei an den Stirnflächen jeweils eine Vertiefung für die Bauteile vorgesehen ist und die Verstärkerfaser um den Mantel gewickelt ist. Eine solche Geometrie eignet sich besonders gut zur Unterbringung in Flugkörpern, da dann wenig ungenutzte Hohlräume entstehen. Durch die Ausgestaltung der Wickelgeometrie der Faser kann die Absorptionseffizienz in der Faser optimiert werden. Dabei dürfen die erlaubten minimalen Biegeradien der Fasern jedoch nicht unterschritten werden. Es sind auch Abflachungen an verschiedenen Seiten des Zylinders möglich.

In einer Ausgestaltung der Erfindung ist ein optischer Faraday-Isolator zwischen dem Resonator und dem Faserverstärker angeordnet. Ein solcher Isolator ist quasi eine optische Diode. Sie verhindert ein Zurücklaufen der Strahlung aus dem Verstärker in den Master Oszillator. Dadurch unbeabsichtigte Laseraktivität vermieden.

Die Einkopplung des Pumplichts in den Faserverstärker erfolgt vorzugsweise durch einen dichroitischen Strahlteiler vor dem Faserverstärker. Das Pumplicht kann an beiden Enden des Faserverstärkers eingekoppelt werden. Eine Einkopplung ist aber auch mit einer Faseroptik möglich. In einer Ausgestaltung der Erfindung ist der Faserverstärker als Doppelkernfaser ausgebildet und die Fasern der Pumplaser sind direkt mit dem Pumpkern verbunden. Dadurch wird eine besonders Vibrationsunempfindliche und kompakte Anordnung geschaffen.

Es kann eine Lichtleitfaser zum Transport der Laserstrahlung zur Sendeoptik eines LADAR-Systems vorgesehen sein. Dann kann die Laseranordnung außerhalb des Kopfes des Flugkörpers angeordnet werden, wo mehr Raum zur Verfügung steht.

Ein Ausführungsbeispiel der Erfindung ist nachstehend unter Bezugnahme auf die beigefügten Zeichnungen näher beschrieben.

### Kurze Beschreibung der Zeichnungen

- Fig.1: zeigt den prinzipiellen Aufbau eines LADAR-Senders
- Fig.2: zeigt schematisch den Aufbau eines Mikrochip-Lasers
- Fig.3: zeigt die Vorderseite eines LADAR-Senders mit zylindrischem Träger
- Fig.4: zeigt die Rückseite des LADAR-Senders aus Fig.3
- Fig.5: zeigt den prinzipiellen Aufbau einer Laserfaser

### Beschreibung eines Ausführungsbeispiels

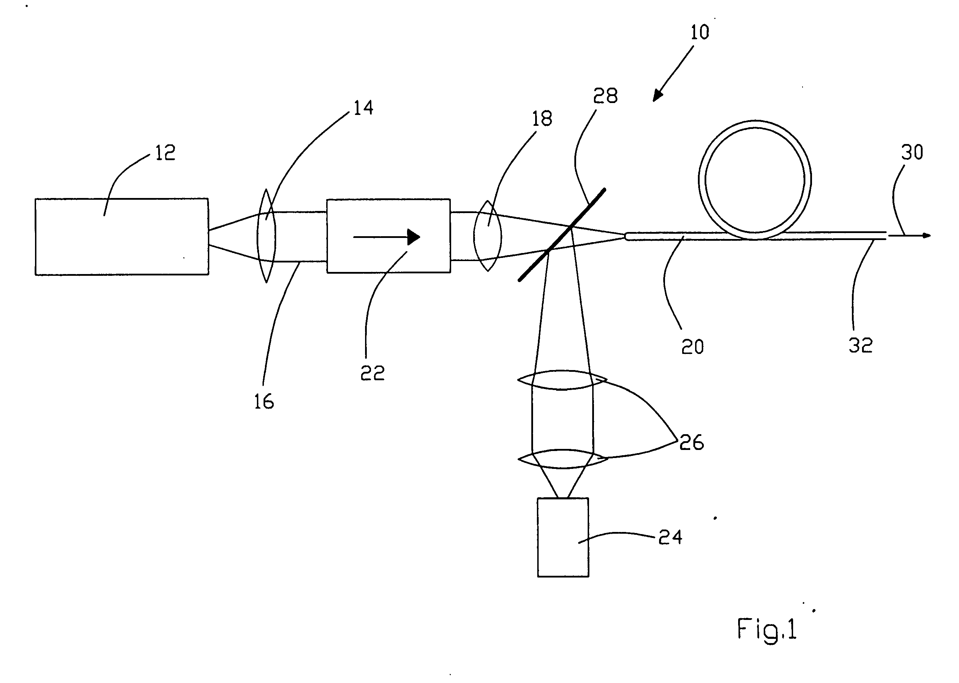

In Fig.1 ist mit 10 ein zweistufiger Laser für den Sender eines LADAR-Systems bezeichnet, mit welchem die zurückgestreute Leistung detektierbar ist (inkohärentes LADAR-System). Der Laser 10 ist als sogenannter Master-Oscillator-Power-Amplifier (MOPA) aufgebaut. Die Strahlung eines Mikrochip-Lasers 12 wird mit einer Linse 14 zu einem parallelen Bündel 16 gebündelt und mittels einer als Linse 18 dargestellten Laser-Faser-Kupplung in die Faser 20 eines Faserverstärkers eingekoppelt. Der Faserverstärker ist eine EDFA (Erbium Doped Fiber Amplifier). Zwischen der Kupplung 18 und der Sammellinse 14 ist ein optischer Faraday-Isolator 22 vorgesehen. Der Faraday-Isolator 22 bewirkt, daß Strahlung nur in Richtung des Pfeils und nicht entgegengesetzt passieren kann. Dadurch wird eine unbeabsichtige Anregung von Laserstrahlung verhindert. Die Strahlung eines als Pumpdiode arbeitenden Diodenlasers 24 wird mittels einer Abbildungsoptik 26 und eines dichroitischen Spiegels 28 in den Kern des Faserverstärkers 20 geleitet.

Der Faserverstärker 20 besteht aus einer gewickelten Verstärkerfaser, an dessen Ende 32 die verstärkte Strahlung 30 austritt.

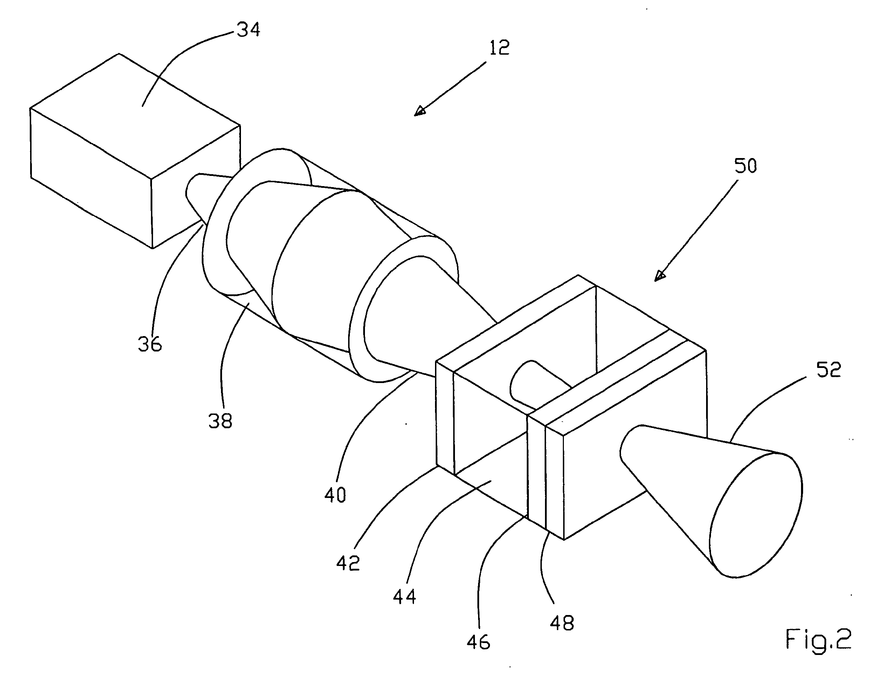

In Fig.2 ist der Mikrochip-Laser 12 im Detail dargestellt. Der Mikrochip-Laser 12 umfasst eine Pumpdiode 34, deren austretende Strahlung 36 mittels einer Linse 38 gebündelt wird. Die gebündelte Strahlung 40 durchtritt den teildurchlässigen Eintrittsspiegel 42 des Resonators 50. Als aktives Medium dient eine Erbium dotierte Glasplatte 44. Ein sättigbarer Absorber 46 ist vor dem Austrittsspiegel 48 zwischen dem Austrittsspiegel 48 und dem aktiven Medium 44 angeordnet. Durch den Absorber 46 wird eine passive Güteschaltung des Lasers zur Generierung der Laserpulse verwirklicht. Die gepulste Laserstrahlung 52 tritt dann nach rechts in Fig.2 aus. Es ist aber auch möglich eine aktive Güteschaltung vorzusehen.

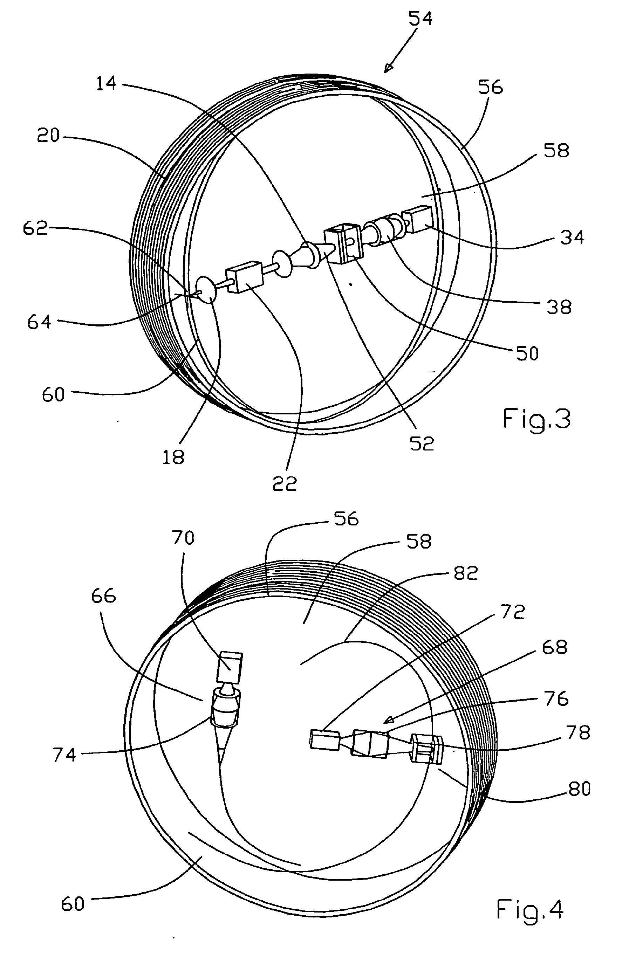

In Fig.3 und Fig. 4 ist ein Sender 54 für ein flugtaugliches LADAR-System dargestellt. Der Sender 54 umfasst eine Trommel 56 aus gut wärmeleitendem Material, auf welches die Faser des Faserverstärkers 20 aufgewickelt ist. Die Trommel ist mit einem Boden 58 versehen. Auf der Vorderseite des Bodens 58, die in Fig. 3 dargestellt ist, ist der anhand von Fig.2 beschriebene Mikrochip-Laser 12 mit Pumpdiode 34, Linse 38 und Resonator 50 befestigt. Das Laserlicht wird, wie bei Fig.1 bereits beschrieben, mittels der Linse 14 gebündelt und durch den Faraday-Isolator 22 gelenkt. Eine Linse 18 dient zur Fokussierung auf die Einkoppelstelle am Faserverstärker. Im Gegensatz zu Fig.1 ist bei der hier gezeigten Anordnung aber kein dichroitischer Spiegel zur Einkopplung des Pumplichts in den Faserlaser vorgesehen. Hier wird das Pumplicht mittels einer Lichtleitfaser 60 in das erste Ende 62 des Faserverstärkers eingekoppelt. Hierfür wird ein Koppelelement 64 verwendet. Die Lichtleitfaser 60 wird durch den Boden 58 der Trommel 56 hindurchgeführt. Auf der der Vorderseite gegenüberliegenden Rückseite des Bodens 56 sind zwei Pumplichtquellen 66 und 68 befestigt. Als Pumplichtquelle dient jeweils ein Diodenlaser 70 bzw. 72, dessen Strahlung über eine Linse 74 bzw. 76 fokussiert wird. Die Strahlung des Diodenlasers 70 wird über den Lichtleiter 60 und das Koppelelement 64 am Ende 62 in den Faserverstärker eingekoppelt. Die Strahlung des Diodenlasers 72 wird über das Koppelelement 78 am anderen Ende 80 des Faserlasers eingekoppelt. Am diesem Ende 80 wird auch die Ausgangsstrahlung des Faserlasers 20 in eine Lichtleitfaser 82 geleitet. Die Lichtleitfaser 82 führt in die Spitze des Flugkörpers (nicht dargestellt) und emittiert als Sender des LADAR-Systems gepulste Laserstrahlung.

Zum Schutz der Bauteile ist jeweils ein (nicht dargestellter) Deckel vorgesehen. Die Deckel verschließen die Vorder- und Rückseite der Trommel und verhindern so Beschädigungen und Verschmutzungen und sonstige Einflüsse der Bauteile.

In der vorliegenden Ausführung ist der Träger 56 zylinderförmig mit kreisförmigen Querschnitt ausgebildet. Dadurch ist der Träger optimal an die Form des Flugkörpers angepasst und hat den geringsten Raumbedarf. Zur Erhöhung der Effizienz des Faserverstärkers ist es jedoch möglich eine andere Querschnittsform zu wählen.

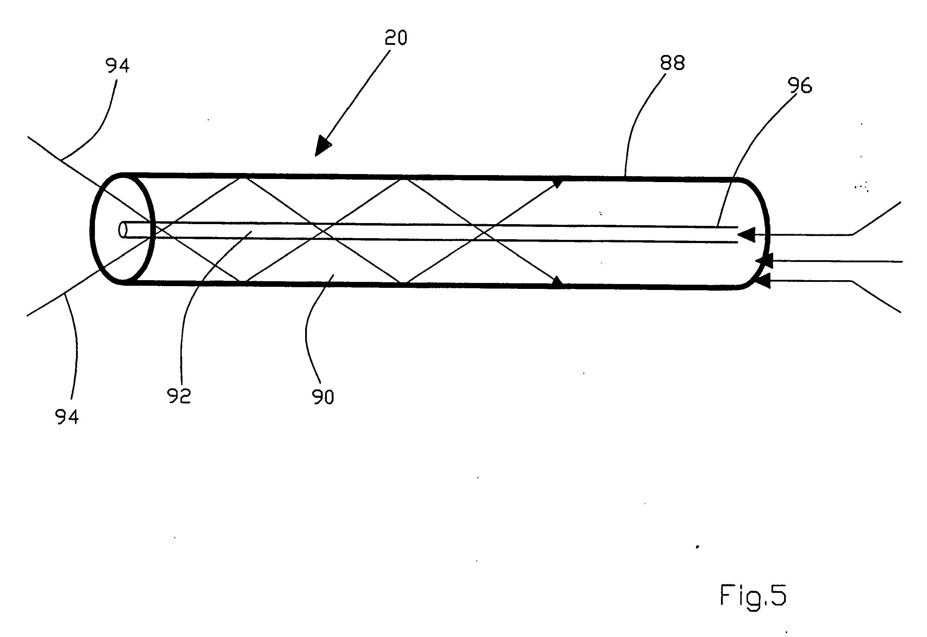

In Fig. 5 ist der prinzipielle Aufbau einer Laserfaser gezeigt. Die als Faserverstärker 20 verwendete Laserfaser umfasst neben der Außenbeschichtung 88 einen Lasermantel 90, in welchem das aus den Dioden 70 und 72 eingekoppelte Pumplicht 94 umläuft. Dadurch wird das laseraktive Material im Kern 92 der Laserfaser angeregt und die Verstärkung von durchlaufendem Laserlicht 96 bewirkt. Die Faser kann in einem erlaubten Rahmen gebogen werden. Dadurch wird jedoch die Effektivität des Verstärkers leicht beeinflußt.

## Patentansprüche

1. LADAR-System, enthaltend eine Laseranordnung mit einem Master-Oszillator mit einem laseraktiven Medium (44) und mit einer als Faserverstärker (20) ausgebildeten Verstärkerstufe zur Leistungsverstärkung, mit welcher Leistung der den Master-Oszillator verlassenden Strahlung (52) verstärkt wird, wobei der Faserverstärker (20) eine Verstärkerfaser umfasst,
**dadurch gekennzeichnet, dass**
a. ein Trägerkörper (56) mit einem Mantel vorgesehen ist, um dessen Mantel herum die Verstärkerfaser gewickelt ist,
b. der Trägerkörper (56) aus einem Material mit einer Temperaturleitfähigkeit besteht, die zur Abführung der Verlustwärme der Laseranordnung geeignet ist
c. der Master-Oszillator als ein Mikrochip-Laser (12) ausgebildet und in einer Vertiefung des Trägerkörpers (56) angeordnet ist.

2. LADAR-System nach Anspruch 1,
**gekennzeichnet durch**
einen oder mehrere Diodenlaser (24, 70, 72) als Pumplichtquelle für ein Pumplicht (94) des Faserverstärkers (20).

3. LADAR-System nach Anspruch 2,
**gekennzeichnet durch**
einen dichroitischen Strahlteiler (28) vor dem Faserverstärker (20) zur Einkopplung des Pumplichts.

4. LADAR-System nach Anspruch 2,
**gekennzeichnet durch**
eine Faseroptik (60) zur Einkopplung des Pumplichts (94).

5. LADAR-System nach einem der Ansprüche 2-4,
**dadurch gekennzeichnet, dass**
das Pumplicht (94) an beiden Enden (62, 80) des Faserverstärkers (20) einkoppelbar ist.

6. LADAR-System nach Anspruch 5,
**dadurch gekennzeichnet, dass**
die Verstärkerfaser als Doppelkernfaser mit einem Pumpkern ausgebildet ist und Fasern der Diodenlaser (70, 72) direkt mit dem Pumpkern verbunden sind.

7. LADAR-System nach einem der vorhergehenden Ansprüche,
**dadurch gekennzeichnet, dass**
es inkohärent arbeitet.

8. LADAR-System nach einem der vorhergehenden Ansprüche,
**dadurch gekennzeichnet, dass**
in dem Trägerkörper (56) eine Vertiefung vorgesehen ist, in welchem die Pumplichtquelle und/oder weitere optische Teile (14, 18, 22, 26) angeordnet sind.

9. LADAR-System nach einem der vorhergehenden Ansprüche,
**dadurch gekennzeichnet, dass**
der Trägerkörper (56) zylindrisch oder prismatisch mit elliptischem oder nierenförmigem Querschnitt ist, wobei an den Stirnflächen jeweils eine Vertiefung für den Master-Oszillator und/oder die Pumplichtquelle und/oder weitere optische Teile (14, 18, 22, 26) vorgesehen ist.

10. LADAR-System nach einem der vorhergehenden Ansprüche,
**dadurch gekennzeichnet, dass**
die Vertiefung mit einer Abdeckung verschließbar ist.

11. LADAR-System nach einem der vorhergehenden Ansprüche,
**gekennzeichnet durch**
einen optischen Faraday-Isolator (22) zwischen dem Master-Oszillator und dem Faserverstärker (20).

12. LADAR-System nach einem der vorgehenden Ansprüche,
**gekennzeichnet durch**
Wärmeleitpaste, in welche die Verstärkerfaser eingebettet ist.

13. LADAR-System nach einem der vorgehenden Ansprüche,
**dadurch gekennzeichnet, dass**
die Verstärkerfaser mittels wärmeleitenden Klebstoffs an dem Trägerkörper (56) befestigt ist.

14. LADAR-System nach einem der vorgehenden Ansprüche,
**gekennzeichnet durch**
eine Lichtleitfaser (82) zum Transport von Laserstrahlung zu einer Sendeoptik.

## Claims

1. LADAR system, containing a laser arrangement with a master oscillator having a laser-active medium (44) and having an amplifier stage, which is in the form of a fibre amplifier (20) for power amplification, with which power the radiation (52) leaving the master oscillator is amplified, and with the fibre amplifier (20) comprising an amplifier fibre,
**characterized in that**
a. a mount body (56) with a casing is provided, around whose casing the amplifier fibre is wound,
b. the mount body (56) is composed of a material with a thermal conductivity which is suitable for dissipation of the heat losses from the laser arrangement,
c. the master oscillator is in the form of a microchip laser (12) and is arranged in a depression in the mount body (56).

2. LADAR system according to Claim 1,
**characterized by**
one or more diode lasers (24, 70, 72) as a pump light source for pump light (94) for the fibre amplifier (20).

3. LADAR system according to Claim 2,
**characterized by**
a dichroitic beam splitter (28) upstream of the fibre amplifier (20) in order to inject the pump light.

4. LADAR system according to Claim 2,
**characterized by**
fibre optics (60) for injection of the pump light (94).

5. LADAR system according to one of Claims 2-4,
**characterized in that**
the pump light (94) can be injected at both ends (62, 80) of the fibre amplifier (20).

6. LADAR system according to Claim 5,
**characterized in that**
the amplifier fibre is in the form of a double-core fibre with a pump core, and fibres of the diode lasers (70, 72) are connected directly to the pump core.

7. LADAR system according to one of the preceding claims,
**characterized in that**
the LADAR system operates incoherently.

8. LADAR system according to one of the preceding claims,
**characterized in that**
a depression is provided in the mount body (56) and the pump light source and/or further optical parts (14, 18, 22, 26) are arranged in this depression.

9. LADAR system according to one of the preceding claims,
**characterized in that**
the mount body (56) is cylindrical or prismatic with an elliptical or kidney-shaped cross section, with in each case one depression for the master oscillator and/or the pump light source and/or further optical parts (14, 18, 22, 26) being provided on the end surfaces.

10. LADAR system according to one of the preceding claims,
**characterized in that**
the depression can be closed by a cover.

11. LADAR system according to one of the preceding claims,
**characterized by**
an optical Faraday oscillator (22) between the master oscillator and the fibre amplifier (20).

12. LADAR system according to one of the preceding claims,
**characterized by**
thermally conductive paste in which the amplifier fibre is embedded.

13. LADAR system according to one of the preceding claims,
**characterized in that**
the amplifier fibre is attached to the mount body (56) by means of thermally conductive adhesive.

14. LADAR system according to one of the preceding claims,
**characterized by**
an optical fibre (82) for transportation of laser radiation to transmission optics.

## Revendications

1. Système LADAR, comprenant un arrangement à laser avec un oscillateur maître comprenant un milieu actif laser (44) et un étage d'amplification réalisé sous la forme d'un amplificateur à fibres (20) pour amplifier la puissance avec lequel est amplifiée la puissance du rayonnement (52) sortant de l'oscillateur maître, l'amplificateur à fibres (20) comprenant une fibre amplificatrice, **caractérisé en ce que**
a. il est prévu un corps porteur (56) muni d'une enveloppe autour de l'enveloppe duquel est enroulée la fibre amplificatrice,
b. le corps porteur (56) se compose d'un matériau ayant une conductivité thermique permettant la dissipation de la chaleur perdue de l'arrangement à laser,
c. l'oscillateur maître est réalisé sous la forme d'un laser à microcircuit (12) et il est disposé dans un enfoncement du corps porteur (56).

2. Système LADAR selon la revendication 1, **caractérisé par** un ou plusieurs lasers à diode (24, 70, 72) faisant office de source lumineuse de pompage pour une lumière de pompage (94) de l'amplificateur à fibres (20).

3. Système LADAR selon la revendication 2, **caractérisé par** un séparateur de faisceaux dichroïque (28) devant l'amplificateur à fibre (20) pour l'injection de la lumière de pompage.

4. Système LADAR selon la revendication 2, **caractérisé par** une optique à fibres (60) pour l'injection de la lumière de pompage (94).

5. Système LADAR selon l'une des revendications 2 à 4, **caractérisé en ce que** la lumière de pompage (94) peut être injectée aux deux extrémités (62, 80) de l'amplificateur à fibres (20).

6. Système LADAR selon la revendication 5, **caractérisé en ce que** la fibre amplificatrice est réalisée sous la forme d'une fibre à double noyau avec un noyau de pompage et les fibres du laser à diode (70, 72) sont reliées directement avec le noyau de pompage.

7. Système LADAR selon l'une des revendications précédentes, **caractérisé en ce qu'**il fonctionne de manière incohérente.

8. Système LADAR selon l'une des revendications précédentes, **caractérisé en ce que** dans le corps porteur (56) est prévu un enfoncement dans lequel sont disposées la source lumineuse de pompage et/ou d'autres pièces optiques (14, 18, 22, 26).

9. Système LADAR selon l'une des revendications précédentes, **caractérisé en ce que** le corps porteur (56) est de forme cylindrique ou prismatique avec une section transversale elliptique ou réniforme, un enfoncement pour l'oscillateur maître et/ou la source lumineuse de pompage et/ou d'autres pièces optiques (14, 18, 22, 26) étant à chaque fois prévu sur les surfaces frontales.

10. Système LADAR selon l'une des revendications précédentes, **caractérisé en ce que** l'enfoncement peut être fermé par une protection.

11. Système LADAR selon l'une des revendications précédentes, **caractérisé par** un isolateur de Faraday optique (22) entre l'oscillateur maître et l'amplificateur à fibres (20).

12. Système LADAR selon l'une des revendications précédentes, **caractérisé par** de la pâte thermoconductrice dans laquelle est enrobée la fibre amplificatrice.

13. Système LADAR selon l'une des revendications précédentes, **caractérisé en ce que** la fibre amplificatrice est fixée au corps porteur (56) à l'aide d'un adhésif conduisant la chaleur.

14. Système LADAR selon l'une des revendications précédentes, **caractérisé par** une fibre optique (82) destinée à transporter le rayonnement laser jusqu'à une optique d'émission.
